# EUROPEAN PATENT APPLICATION

(11) **EP 0 880 276 A2**
(43) Date of publication of application: **25.11.1998**
(21) Application number: 98102616.4
(22) Date of filing: 16.02.1998
(51) Int. Cl.: H04N 3/15

(54) **Variable resolution driving method for image sensor**

(30) Priority: 20.05.1997 JP 129427/97
(71) Applicant: NEC CORPORATION, Tokyo (JP)
(72) Inventor: Kawamura, Tomohiro, Minato-ku, Tokyo (JP); Uchiya, Satoshi, Minato-ku, Tokyo (JP)
(74) Representative: von Samson-Himmelstjerna, Friedrich R., Dipl.-Phys.

(57) **Abstract**

In an image sensor using an image sensor element of all pixel read type, a switching of an image resolution to 1/2 or smaller is possible without changing the angle of view. Electrodes (9) of a vertical transfer register (8), for reading signal charges (0B; R11; R31; R51; R71; G12; G21; G32; G41; G52; G61; B22; B42; B62), are provided by discrete wiring every unit pixel (0B; R11; R31; R51; R71; G12; G21; G32; G41; G52; G61; B22; B42; B62). Drive pulses (φV1; φV2; φV3A; φV3B; φV3C; φV3D; φV4) to be applied to the read electrodes (9) are 3 phases composed of three sets of pulses (φV1, φV2, φV3A, φV4), (φV1, φV2, φV3B, φV4) and (φV1, φV2, φV3C, φV4). By changing the read timing (t1; t2; t3; t4) at the respective electrodes (9), the re-arrangement of signal charge (0B, ..., B62) in the transfer register (8) is performed. With using this electrode construction and the drive method thereof, the switching of resolution can be done without the angle of view. Further, by summing the rearranged signal charges (0B, ..., B62), it is possible to accommodate the switching of the resolution to a case where the angle of view is changed. It becomes possible to switch the resolution correspondingly to a computer display standard.

## Description

### BACKGROUND OF THE INVENTION

The present invention relates to a driving method for an image sensor and, particularly, to a variable resolution driving method for an image sensor.

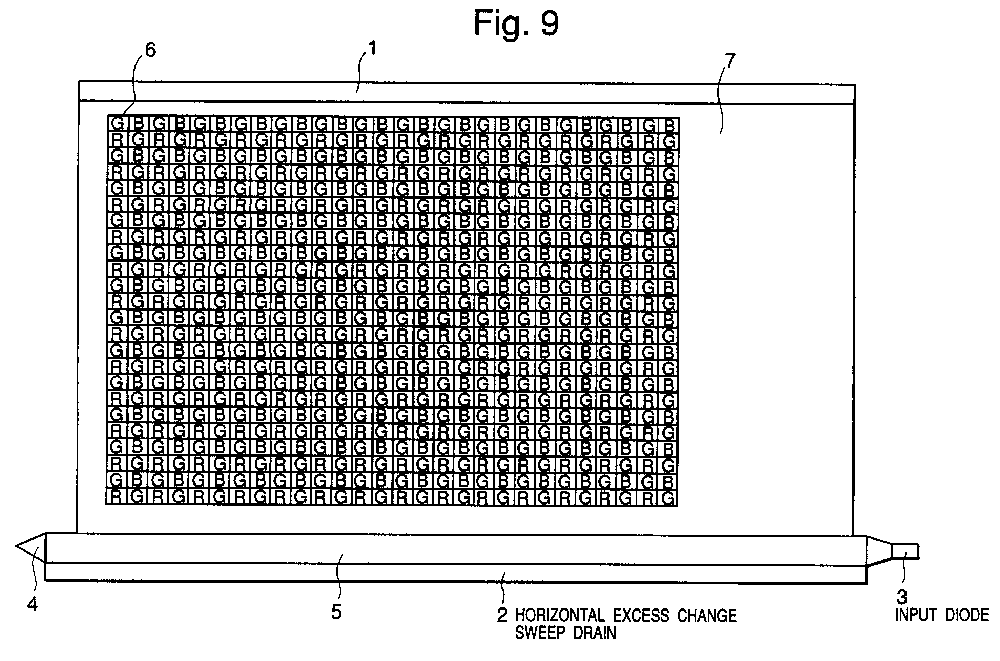

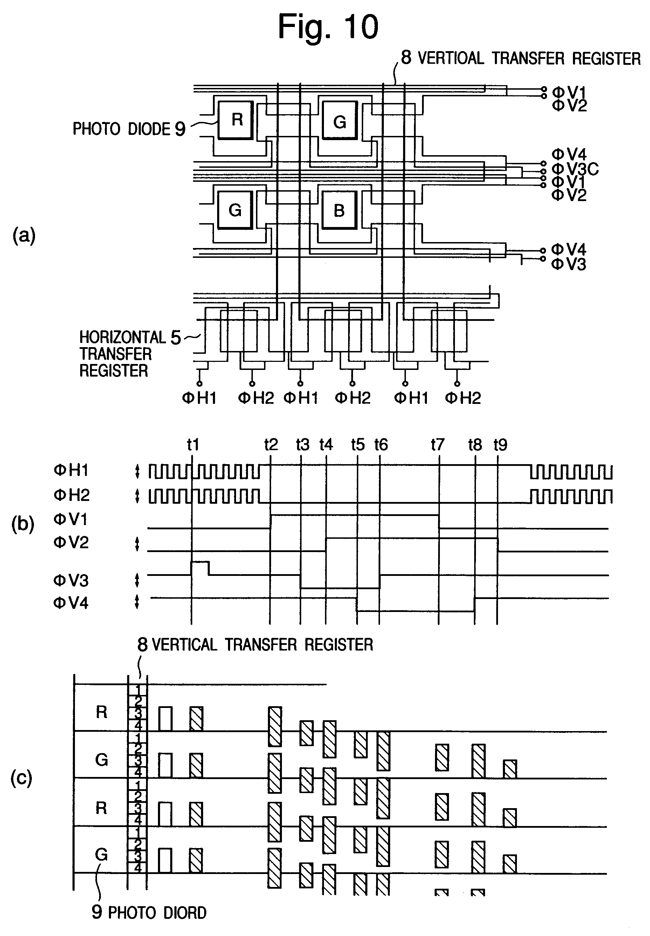

A conventional image sensor of this type will be described with reference to Figs. 9 and 10. Fig. 9 shows a whole construction of the conventional collective pixel read type image sensor element. The image sensor element shown in Fig. 9 includes an opt-electric conversion area (RGB Bayer arrangement type filter) 6 for converting light into electric signal charge, an optical black level area 7 which becomes a reference level of an image, a vertical excess charge sweeping drain 1 for removing excess charge, a horizontal excess charge sweeping drain 2 for removing excess charge, an input diode 3 to which a signal can be forcibly input, a horizontal transfer register 5, an output amplifier 4 and a vertical transfer register 8 which is shown in Fig. 10(a).

An operation of the image sensor using the above mentioned image sensor element will be described with reference to Fig. 10. A transfer electrode of the vertical transfer register 8 is constituted with four electrodes φV1, φV2, φV3 and φV4 for the respective unit pixels as shown in Fig. 10(a). The signal charge of the unit pixels is read out by the electrode φV3 and accumulated below one of the four electrodes which is below the electrode φV3 by two electrodes. Fig. 10(b) is a timing chart of drive pulses applied to the respective four electrodes. This image sensor is operated by a 4-phase drive in which the image sensor element is driven by different 4 pulses. However, for a signal charge read-out electrode of each pixel, it can be said that the device is operated by a single phase drive in which pixels whose reading of charge is performed by a single combination of four pulses (φV1, φV2, φV3 and φV4) is repeatedly arranged. In order to facilitate understanding of the present invention, the symbols φV1, φV2, ···, φVn depict the electrodes as well as the drive pulses to be applied correspondingly to the respective electrodes in the following description.

Fig. 10(c) shows a movement of charge when a signal charge is read out from a unit pixel and transferred. A time instance t1 to a time instance t2 correspond to Fig. 10(b). The signal charge opt-electrically converted by photo diode of the unit pixel is read out by the electrode φV3 at the time instance t1 and accumulated below the electrodes φV3 and φV4. The signal charge for one electrode is transferred by the pulse φV1 which becomes an on state at the time instance t2 and the pulse φV3 which becomes an off state at the next time instance t3. By repeating such operation, the signal charge is transferred sequentially and the charge transfer of the signal charge for the unit pixel is completed at the time instance t9.

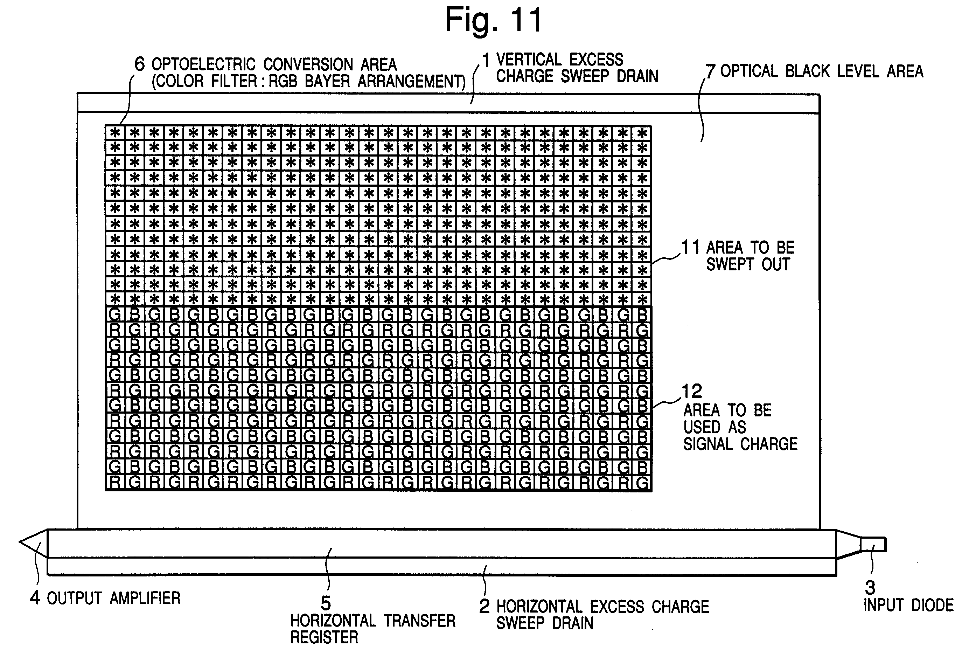

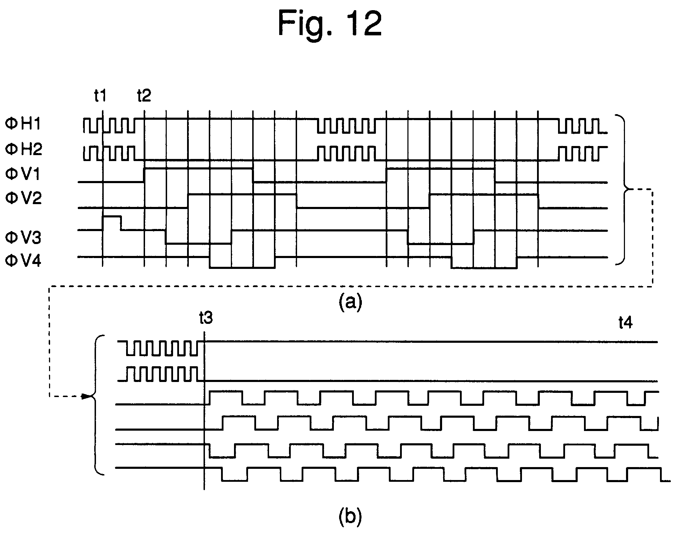

Now, a method for switching the vertical resolution to 1/2 by sweeping out a half of the number of the signal charges in only the vertical direction by changing the drive pulse and using only the remaining half of the signal charges as the signal charges will be described. Fig. 11 shows the whole pixels, a pixel area 11 in which a half of the vertical pixels are to be swept out and a pixel area 12 in which the remaining half of the pixels are used as the signal charge. Figs. 12(a) and 12(b) show drive pulses applied to the respective electrodes φV1, φV2, φV3 and φV4 of the vertical transfer register and drive pulses applied to the respective electrodes φH1 and φH2 of the horizontal transfer register.

First, at the time instance t1 in Figs. 12(a) and 12(b), the signal charges are read out by the vertical transfer register by the read-out pulses. Then, in a time period between time instances t2 and t3, the signal charge area 12 which is the lower half of the pixels in the vertical direction and is shown in Fig. 11 is transferred to the horizontal transfer register at a transfer rate necessary to transfer the all pixels. The signal charges in the area 11 which is the upper half of the opt-electric conversion area 6 and the pixels in which are to be swept out are transferred to the horizontal transfer register in a time period till a start of the next frame at high speed by vertical high speed drive pulses shown by the time instance t3 to t4 in Fig. 12(b). The signal charges which are transferred at high speed are swept out to the excess charge sweep-out drain 2 formed in a lower portion of the horizontal transfer register. Alternatively, these excess charges may be transferred at high speed to the output circuit 4 by the horizontal transfer register. In the latter case, since the signal charges which are not used are not used in the image, the situation is equivalent to the case where these charges are swept out. Alternatively, these charges in the vertical transfer register which are not used may be inversely transferred at high speed to a vertical excess charge sweep-out drain 1 formed in an upper portion of the vertical transfer register opposite to the horizontal transfer register.

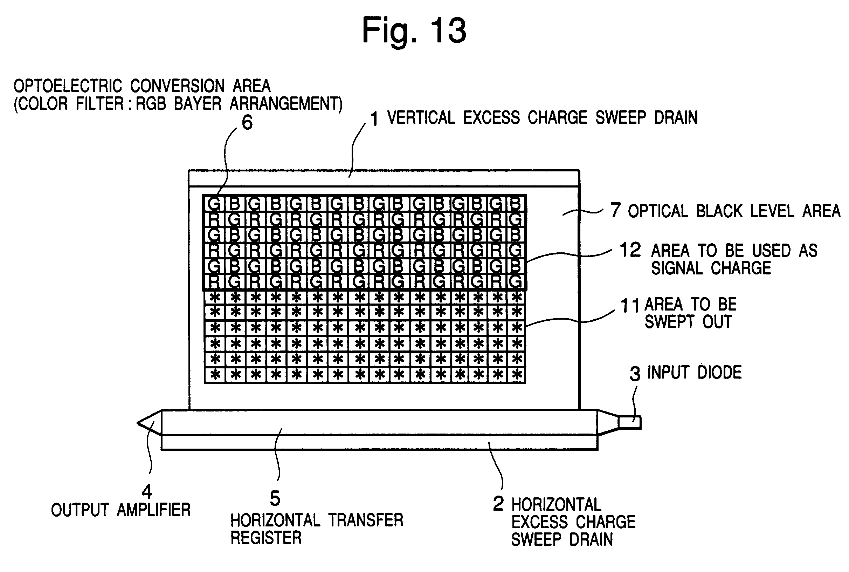

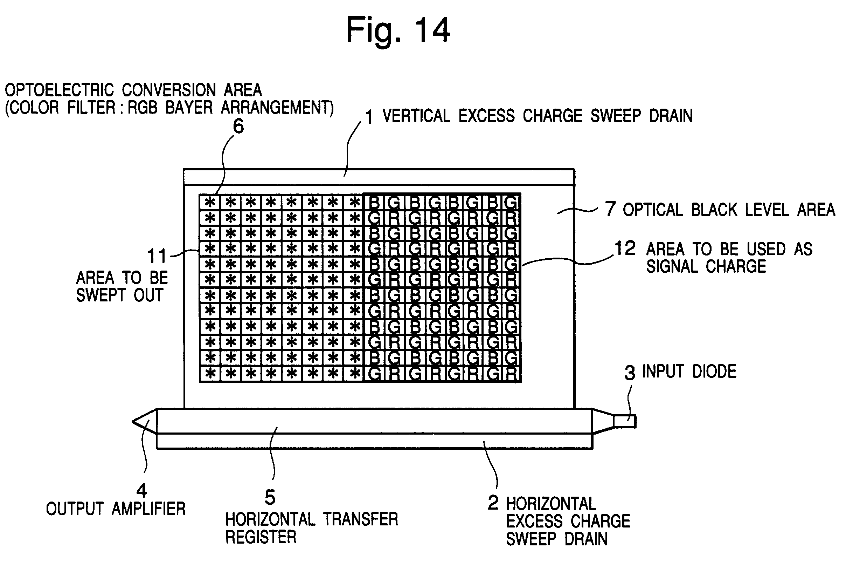

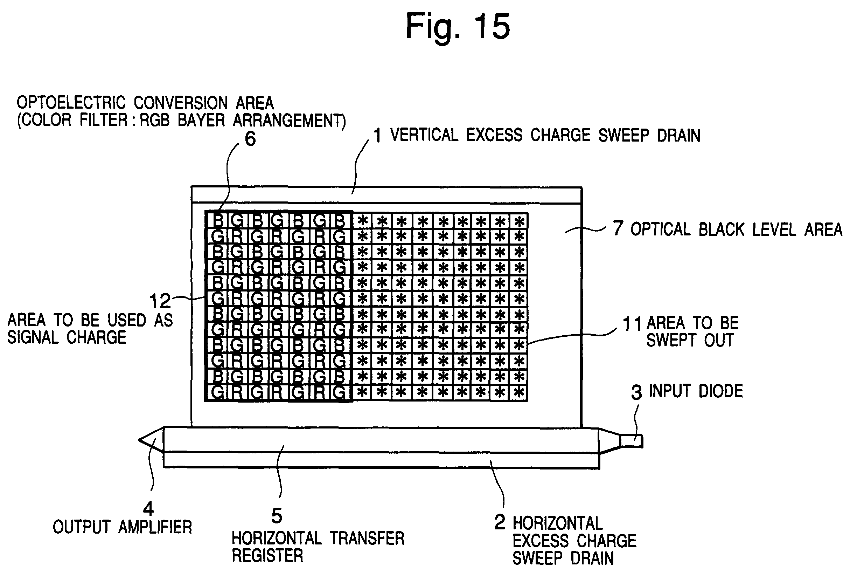

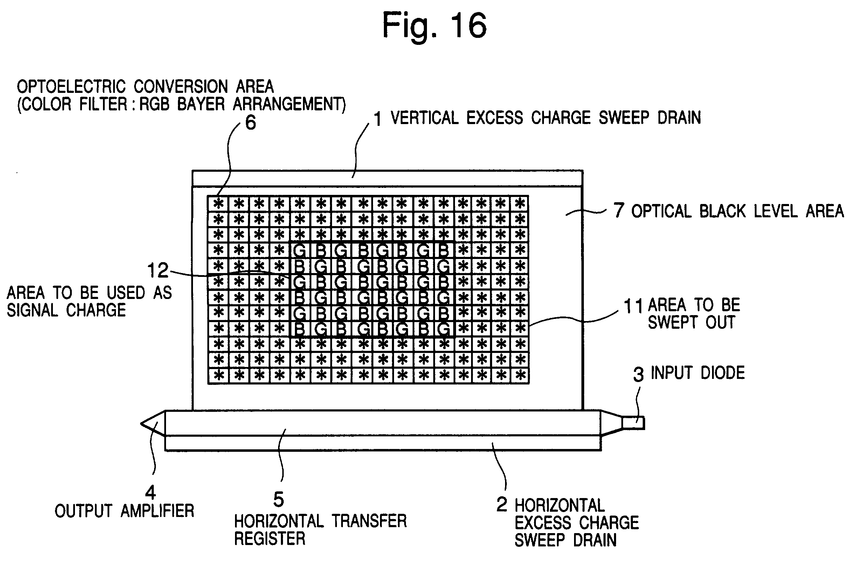

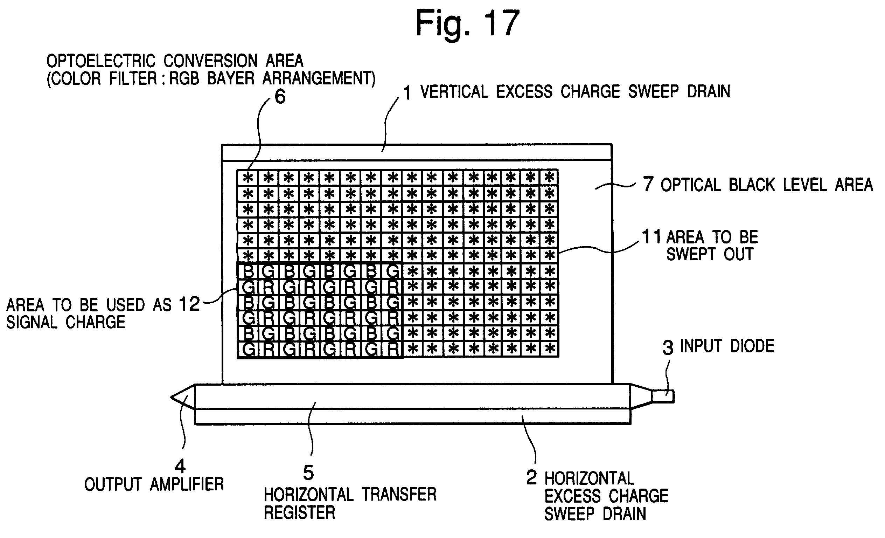

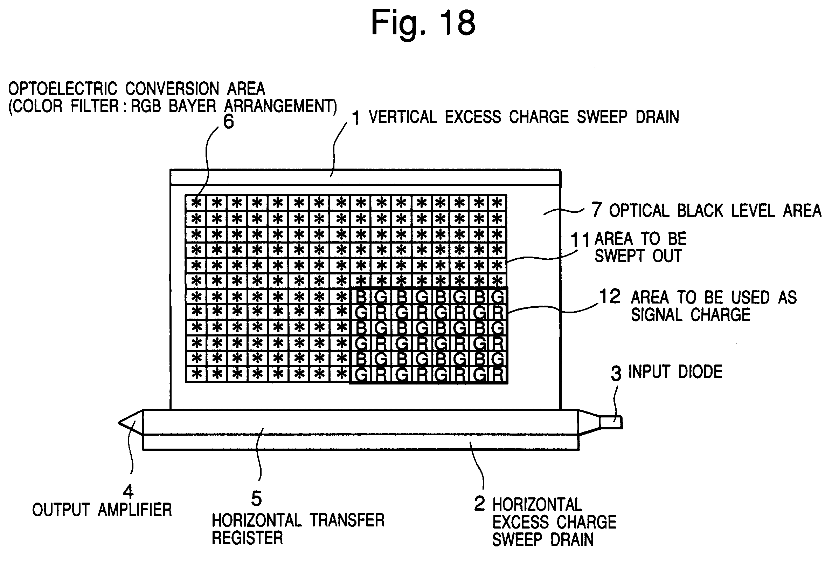

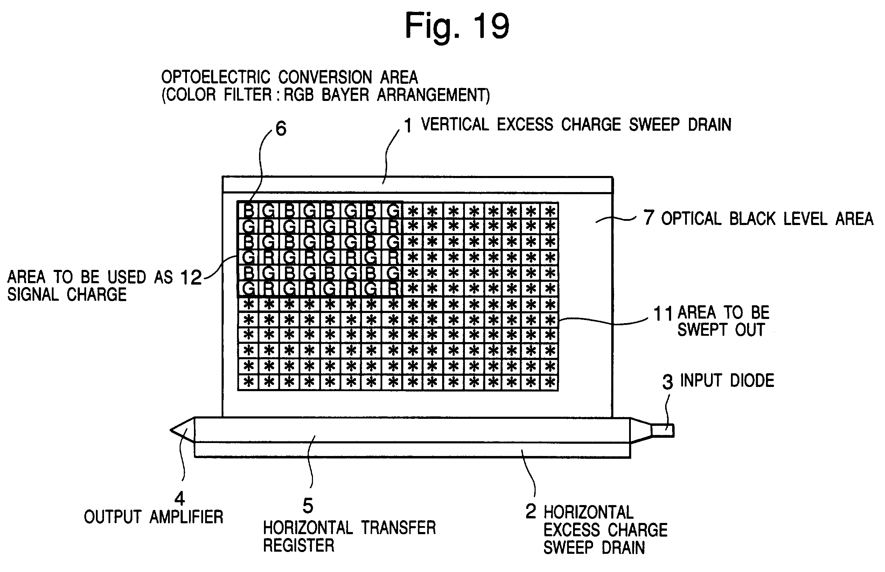

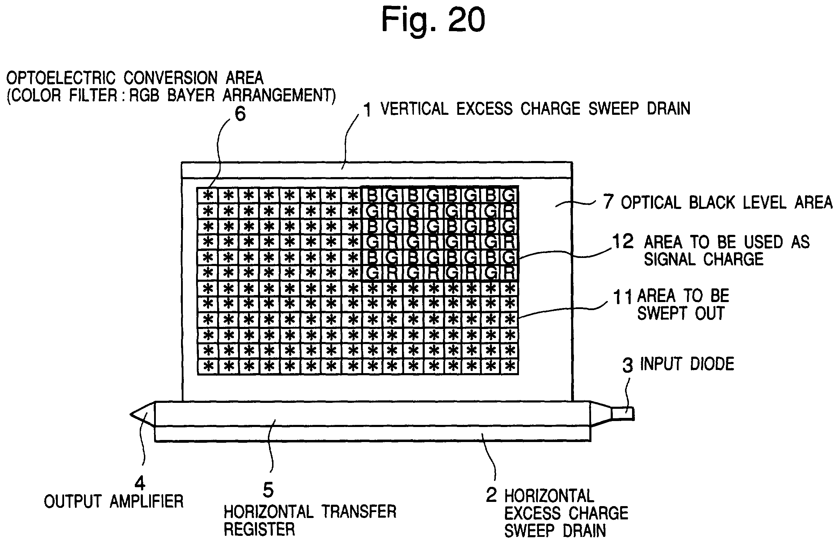

Figs. 13 to 20 show other sweeping methods for sweeping out signal charges. Fig. 13 shows a case where signal charges in an upper half area 12 of the opt-electric conversion area 6 are used and signal charges in a lower half area 11 are swept out. Fig. 14 shows a case where signal charges in a right side half area 12 of the opt-electric conversion area 6 are used and signal charges in a left side half area 11 are swept out. Fig. 15 shows a case where signal charges in a left side half area 12 of the opt-electric conversion area 6 are used and signal charges in a right side half area 11 are swept out. Fig. 16 shows a case where signal charges corresponding to pixels in an upper and lower one-fourth areas of the opt-electric conversion area 6 and in a left and right one-fourth areas thereof are not used and signal charges corresponding to pixels in a center portion of the opt-electric conversion area 6 are used. Fig. 17 shows a case where signal charges corresponding to pixels in an upper half and a right side half of the opt-electric conversion area 6 are swept out and signal charges corresponding to pixels in a lower left side area are used. Fig. 18 shows a case where signal charges corresponding to pixels in an upper half and a left side half of the opt-electric conversion area 6 are swept out and signal charges corresponding to pixels in a lower right side portion are used as the signal charges. Fig. 19 shows a case where signal charges corresponding to pixels in a lower half and right side half of the opt-electric conversion area 6 are swept out and signal charges corresponding to pixels in an upper left of the opt-electric conversion area 6 are used. Fig. 20 shows a case where signal charges corresponding to pixels in an upper half and a left side half of the opt-electric conversion area are swept out and signal charges corresponding to pixels in an upper right side portion of the conversion area are used as the signal charges.

These methods are basically the same and signal charges to be not used are transferred at high speed in the vertical and horizontal transfer registers to sweep out them to the drain or to perform a processing for excluding them.

In the conventional drive method of the image sensor, signal charges other than those which are selected as necessary must be swept out. Therefore, these signal charges becomes useless. Further, since only signal charges corresponding to a portion of the whole pixels are used, an image size becomes smaller than that when all of the pixels are used and thus the angle of view is changed. Further, due to the high speed sweeping of the signal charges, the performance of the drive circuit must be improved. Therefore, it is impossible to lower the power consumption of the image sensor. Further, the image pick-up element of the image sensor itself must be made free from erroneous transfer at the high speed signal charge transfer, which causes the load of the element design to be increased and the yield of the image sensor is lowered.

### SUMMARY OF THE INVENTION

An object of the present invention is to provide an image sensor having an improved signal charge reading electrode structure.

Another object of the present invention is to provide a drive method of the image sensor.

In order to achieve the above objects, according to the present invention, an image sensor includes an image sensor element having a plurality of photo diodes and an electric charge transfer portion provided adjacent to the plurality of the photo diodes to simultaneously and independently read out all of signal charges and transfer them collectively, wherein electrodes for reading the signal charges from the photo diodes to the charge transfer portion correspond in number to three phases or more and are formed periodically.

The drive method of the image sensor according to the present invention is featured by that the signal charges are read out by applying read pulses to the signal charge read electrodes at different timings.

According to the present invention, the read method of the signal charges and the transfer and summing method of the signal charges by using the drive pulses are improved by rearranging the signal charges such that the signal charges separated by at least one pixel in the charge transfer direction of the charge transfer portion become adjacent each other.

### BRIEF DESCRIPTION OF THE DRAWINGS

Fig. 1 shows an electrode construction of a vertical transfer register of an image sensor element according to a first embodiment of the present invention;
Fig. 2 shows a timing chart of a drive pulse according to the first embodiment of the present invention and a transfer of a signal charge;
Fig. 3 shows a conversion of a vertical resolution of an original image into 1/2 in the first embodiment of the present invention;
Fig. 4 shows a timing chart of a drive pulse according to the first embodiment of the present invention and a transfer of a signal charge;
Fig. 5 shows a conversion of both a vertical and horizontal resolutions of an original image into 1/2 in the first embodiment of the present invention;
Fig. 6 shows an electrode construction of a vertical transfer register of an image sensor element according to a second embodiment of the present invention;
Fig. 7 shows a timing chart of a drive pulse according to the second embodiment of the present invention and a transfer of a signal charge;
Fig. 8 shows a conversion of a vertical resolution of an original image into 1/3 in the second embodiment of the present invention;
Fig. 9 shows a construction of an example of an image sensor element of a conventional device;
Fig. 11 is a diagram showing a first method of resolution switching in the conventional device;
Fig. 12 shows a timing chart of a drive pulse according to a first resolution switching method and a transfer of a signal charge;
Fig. 13 is a diagram showing a second method of resolution switching in the conventional device;
Fig. 14 is a diagram showing a third method of resolution switching in the conventional device;
Fig. 15 is a diagram showing a fourth method of resolution switching in the conventional device;
Fig. 16 is a diagram showing a fifth method of resolution switching in the conventional device;
Fig. 17 is a diagram showing a sixth method of resolution switching in the conventional device;
Fig. 18 is a diagram showing a seventh method of resolution switching in the conventional device;
Fig. 19 is a diagram showing an eighth method of resolution switching in the conventional device; and
Fig. 20 is a diagram showing a ninth method of resolution switching in the conventional device.

### DETAILED DESCRIPTION OF THE PREFERRED EMBODIMENTS

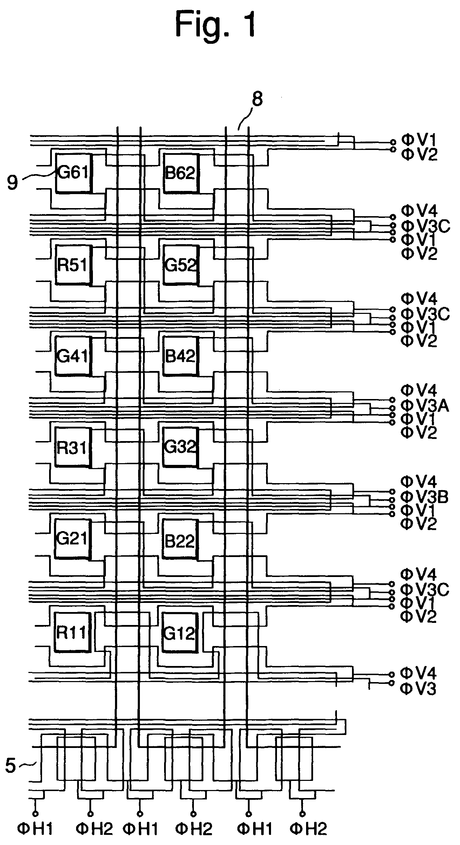

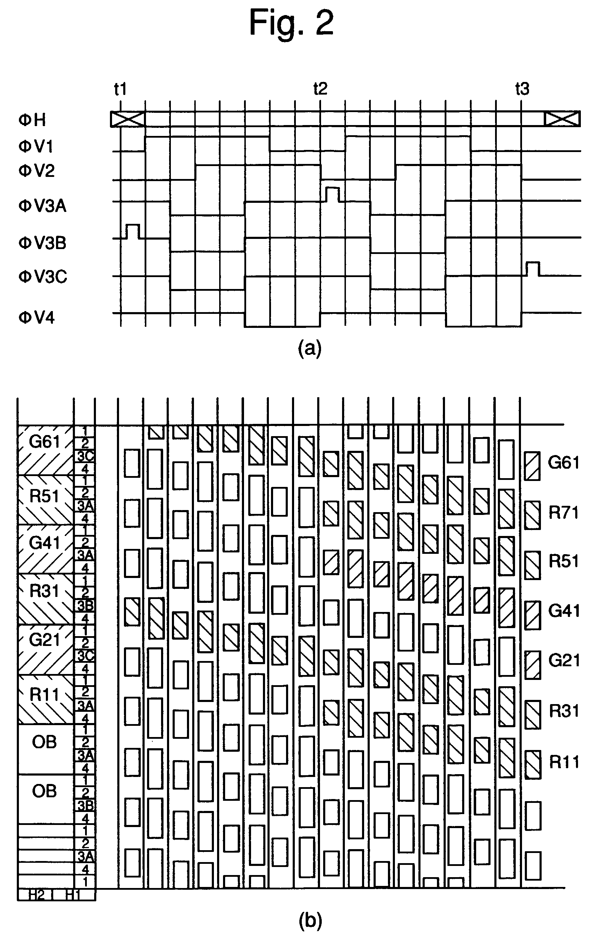

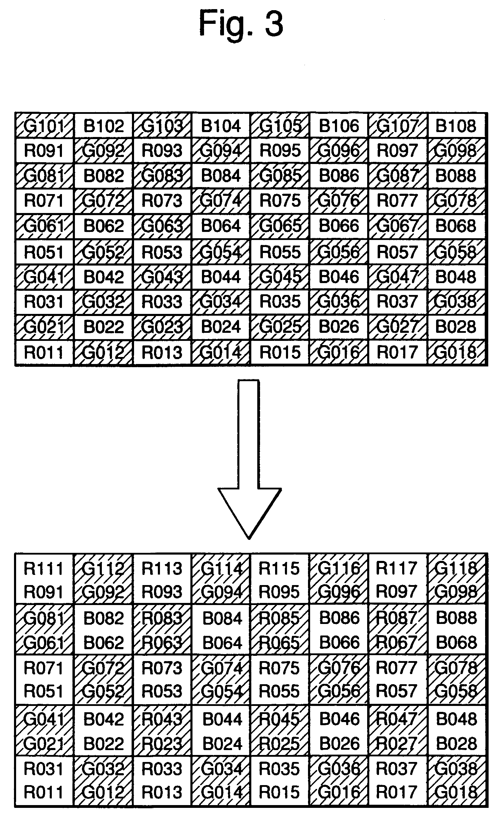

Preferred embodiments of the present invention will be described in detail with reference to the drawings. Fig. 1 shows an electrode construction of a vertical transfer register of an image sensor element according to a first embodiment of the present invention. Fig. 2(a) is a timing chart of drive pulses applied to respective electrodes of a vertical transfer register, Fig. 2(b) shows a re-arrangement of signal charges and Fig. 3 shows a conversion of a vertical resolution of an original image into 1/2.

Referring to Fig. 1, the image sensor element used in this embodiment has a color filter of the RGB Bayer arrangement type and is driven by six phase pulses φV1, φV2, φV3A, φV3B, φV3C and φV4. For a reading-out of a signal charge from a photo diode 9 to a charge transfer porion, three kinds of pixels, that is, pixels whose charge is read out by a combination of pulses (φV1, φV2, φV3A, φV4), pixels whose charge is read out by a combination of pulses (φV1, φV2, φV3B, φV4) and pixels whose charge is read out by a combination of pulses (φV1, φV2, φV3C, φV4), are periodically arranged. That is, it is a 3-phase drive having three pulse combinations for signal reading.

A summation of signal charge in this embodiment will be described. Referring to Figs. 2(a) and 2(b), a signal charge R31 read in a vertical transfer register at a time instance t1 is transferred up to a position of a unit pixel G21 at a time instance t2. Simultaneously therewith, signal charges R11 and G41 are read out. At a time instance t3, the signal charges R11, R31 and G41 are transferred up to positions of unit pixels 0B, R11 and R31, respectively, and simultaneously a signal charge G21 is read out. Thus, the upward arranged pixels R11, G21, R31 and G41 in the order are re-arranged vertically in the order of signal data R11, R31, G21 and G41 by this read-out and transfer method as shown in Fig. 3. That is, signals of color filters of the same kind which are arranged every two pixels are rearranged such that they are adjacent to each other.

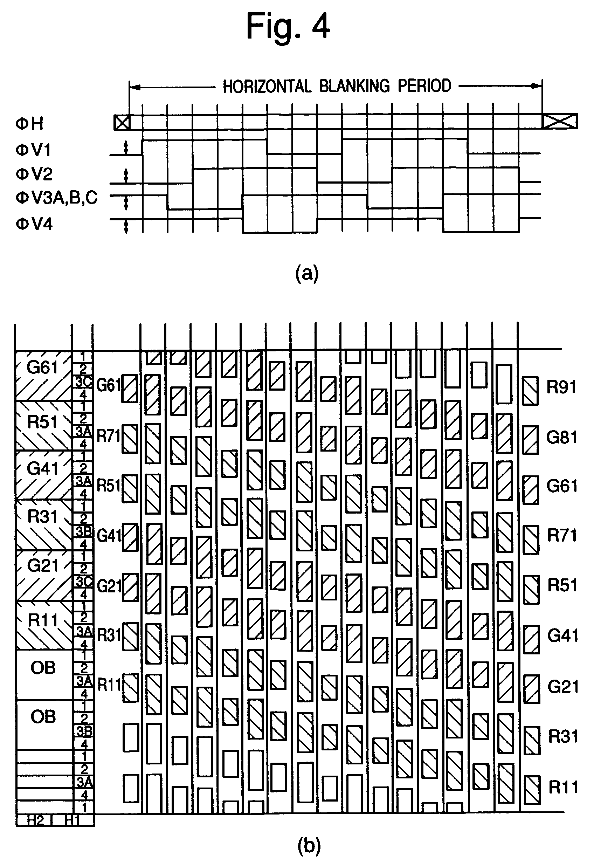

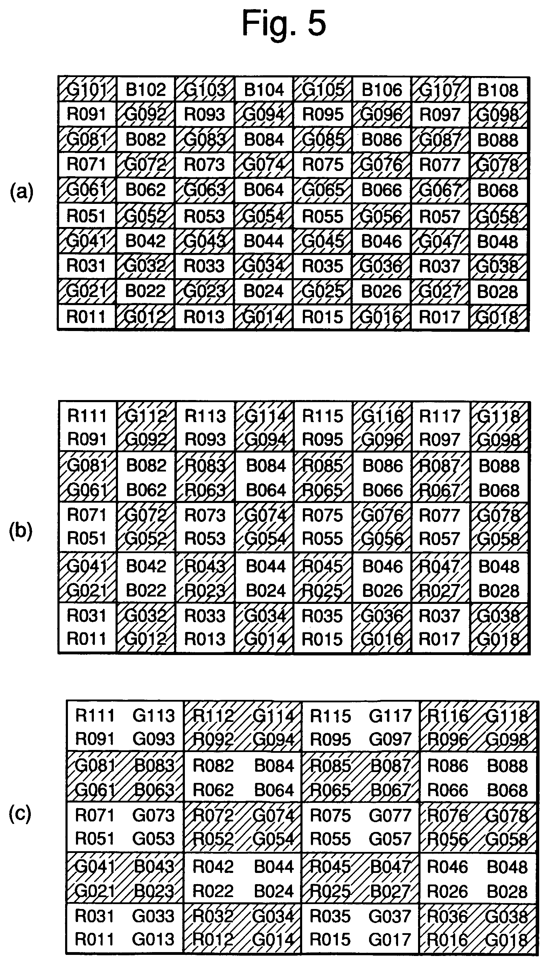

Further, as shown in Figs. 4(a) and 4(b), the rearranged signal charges are transferred by 2 lines in a horizontal blanking period such that the signal charges of pixels having filters of the same kind are summed by a horizontal transfer register in such a way as R11+R31, G21+G41. Simultaneously, pixels in a horizontal direction are re-arranged by an external circuit and an image processing software such that signals of every two pixels become adjacent to each other. By summing the pixel signals of the same kind filter, an image whose vertical and horizontal resolutions are 1/2, respectively, is obtained. The procedures of this processing is shown in Figs. 5(a), 5(b) and 5(c) in the order.

This method differs from the conventional drive method of the image sensor in that, since a certain area of the whole pixels is not swept out, the angle of view is not changed at all and the resolution in both vertical and horizontal directions is converted into 1/2. This is equivalent to a case where an image sensor element whose numbers of vertical and horizontal pixels are halved, respectively, without changing the angle of view and thus it is possible to easily switch between the computer display standards VGA and SIF. In this case, since original 4 pixels are summed as one pixel, the sensitivity becomes four times and the saturation output becomes also four times. Therefore, when a standard output setting in an image at a time when it is switched is made the same as that of the original image, the dynamic range becomes 4 times that of the original image. By using an electronic shutter and making the storage time of the photo diode one-fourth, it is possible to process it in the same manner as that of the original image.

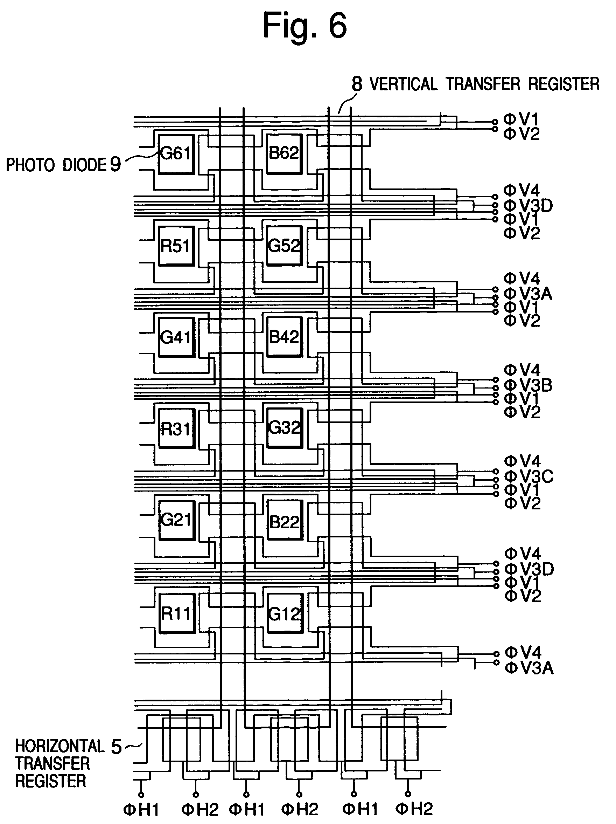

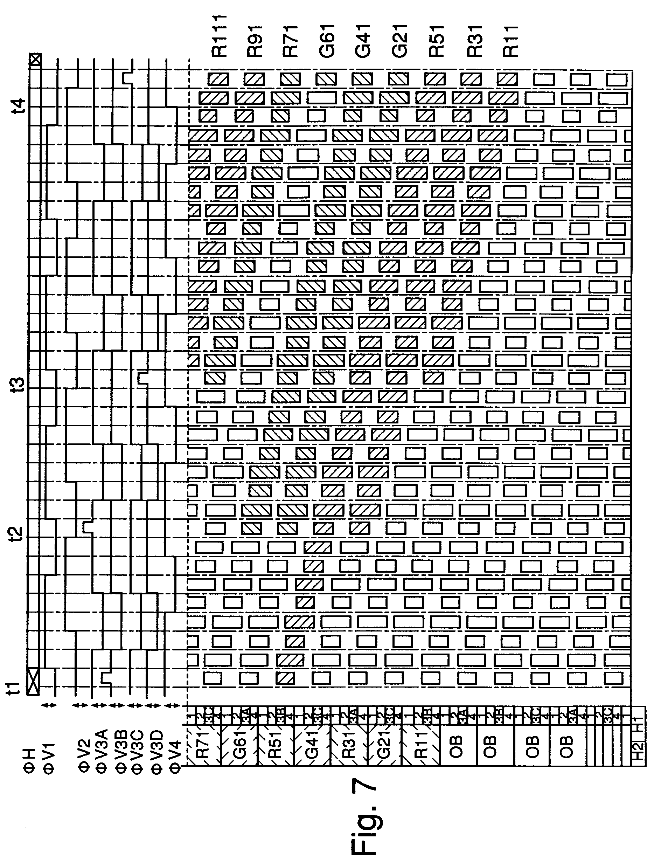

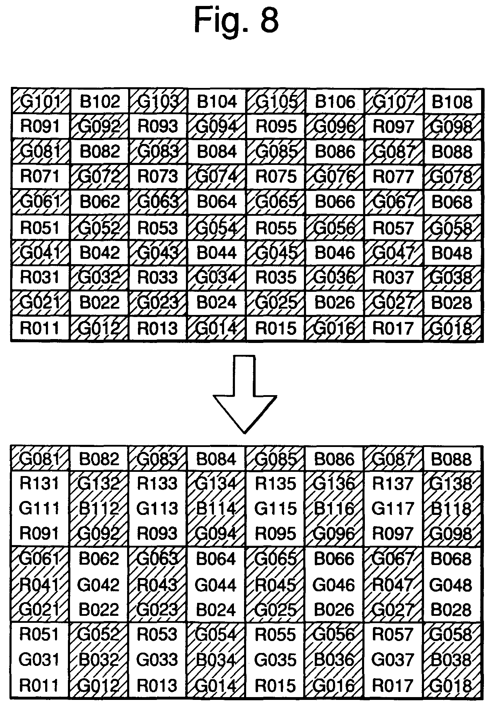

Now, a second embodiment of the present invention will be described with reference to Figs. 6 to 8. Fig. 6 shows an electrode construction of a vertical transfer register of an image sensor element according to a second embodiment of the present invention, an upper portion of Fig. 7 shows a timing chart of a drive pulse applied to respective electrodes of the vertical transfer register, a lower portion of Fig. 7 shows a re-arrangement of signal charges read out from the register and Fig. 8 shows a conversion of vertical resolution of an original image into one-third.

Referring to Fig. 6, the image sensor element according to this embodiment uses a color filter of the RGB Bayer arrangement type and is driven by a 7-phase pulse, φV1, φV2, φV3A, φV3B, φV3C, φV3D, φV4. For a read-out of signal charge from photo diode to a charge transfer portion, pixels whose charge is read out by a combination of pulses (φV1, φV2, φV3A, φV4), pixels whose charge is read out by a combination of pulses (φV1, φV2, φV3B, φV4), pixels whose charge is read out by a combination of pulses (φV1, φV2, φV3C, φV4) and pixels whose charge is read out by a combination of pulses (φV1, φV2, φV3D, φV4), are periodically arranged. That is, it is a 3-phase drive with four kinds of pulse combinations for signal read.

A summation of signal charges in this embodiment will be described. Referring to Fig. 7, a signal charge R51 read in a vertical transfer register at a time instance t1 is transferred up to a position of a unit pixel G41 at a time instance t2. Simultaneously therewith, signal charges R31 and G61 are read out. Till a time instance t3, the signal charges R31, R51 and G61 are transferred up to positions of unit pixels G21, R31 and R51, respectively, and simultaneously a signal charge R11 is read out. Further, charges R11, R31, R51 and G61 are transferred up to positions of the unit pixels 0B, 0B, R11 and R31, respectively, till a time instance t4 and, simultaneously therewith, the signal charges G41 and G21 are read out. The upward arranged pixels R11, G21, R31, G41, R51 and G61 in the order are rearranged in the order of signal data R11, R31, G51, G21 and G41 by this read-out and transfer method. The vertical resolution is converted into one-third without change of the angle of view by transferring this arrangement of the signal charges vertically by 3 lines in a horizontal blanking period as shown in Fig. 8, adding R11, R31 and R51 thereto, and, further, adding G21, G41 and G61 thereto.

Although the color display case has been described, it is, of course, possible to switch the resolution of a monochromatic image without change of angle of view.

As described hereinbefore, in the present invention, an image sensor element of all pixel read-out type is used, the multi-phase, that is, 3-phase or more read-out electrodes are used and the vertical signal charges is re-arranged by driving the read electrodes of the image sensor device, with the drive pulse applied to the respective read electrodes being 3 or more phases. Thus, the switching of resolution becomes possible without change of angle of view.

According to the present invention, when the switching of resolution is performed, it is possible to substantially improve the sensitivity and saturation output by obtaining a sum of the re-arranged signal charges. Further, by using an electronic shutter, it is also possible to switch the angle of view of the image and the resolution without changing the sensitivity and the dynamic range.

The present invention can be equally applied to any image sensor having all pixel read-out type image sensor elements of any system.

## Claims

1. A driving method of an image sensor having an image sensor including a plurality of photo diodes (9) and a plurality of charge transfer portions (5; 8) provided adjacent to the plurality of said photo diodes (9), respectively, and constructed such that all of signal charges (0B; R11; R31; R51; R71; G12; G21; G32; G41; G52; G61; B22; B42; B62) generated in said photo diodes (9) are simultaneously and independently read out and transferred, the number of electrodes (φV1; φV2; φV3A; φV3B; φV3C; φV3D; φV4; φH14; φH2) for reading out the signal charges (0B,...,B62) from said photo diodes (9) to said charge transfer portions (5; 8) corresponds to at least 3 phases and said electrodes (φV1;...;φH2) are arranged periodically, wherein the signal charges (0B,...,B62) are read out by overlapping at different timings (t1; t2; t3; t4;) read-out pulses (φV1; φV2; φV3A; φV3B; φV3C; φV3D; φV4; φH1; φH2) applied to said electrodes (φV1;...;φH2) for reading out the signal charges (0B,...,B62).

2. The drive method as claimed in claim 1, wherein ones of the signal charges (0B,...,B62) read out from said electrodes (φV1;...;φH2), which are adjacent but at least one pixel in the charge transfer direction of said charge transfer portions (5; 8), are rearranged such that the one signal charges (0B,...,B62) are adjacent each other.

3. A drive method as claimed in claim 1 or 2, wherein a transfer by at least 2 lines is performed in a horizontal blanking period after the signal charges (0B,...,B62) are read out and re-arranged.

4. A drive method as claimed in claim 3, wherein the signal charges (0B,...,B62) transferred by at least 2 lines in the horizontal blanking period are summed in said horizontal transfer register (5).

5. A drive method as claimed in anyone of the claims 1 to 4, wherein an image obtained by the signal charges (0B,...,B62) re-arranged by the reading and transfer of the signal charges (0B,...,B62) has a vertical resolution ½ or less.
